# EUROPÄISCHE PATENTANMELDUNG

(11) **EP 2 789 524 A1**
(43) Veröffentlichungstag der Anmeldung: **15.10.2014**
(21) Anmeldenummer: 14169676.5
(22) Anmeldetag: 24.03.2005
(51) Int. Cl.: B62B 5/06

(54) **Maschineneinrichtung mit Teleskopdeichsel**

(30) Priorität: 30.03.2004 DE 102004015596
(62) Teilanmeldung aus: 05716371.9
(71) Anmelder: Poly-clip System GmbH & Co. KG, 65795 Hattersheim (DE)
(72) Erfinder: Ebert, Detlef, 61231 Bad Nauheim (DE)
(74) Vertreter: Eisenführ Speiser

(57) **Zusammenfassung**

Die Erfindung betrifft eine Maschineneinrichtung mit einer Deichsel, insbesondere eine Clipmaschine (CM), welche eine Schleppstangeneinheit (10) enthält, die ein mit der Maschineneinrichtung (CM) verbindbares Anbringende (A) sowie ein Greifende (G) aufweist und die eine Gebrauchsstellung besitzt. Es ist weiterhin vorgesehen, dass die Schleppstangeneinheit (10) mindestens ein erstes und ein zweites Schleppstangenelement (20, 40) aufweist, die jeweils einen Teleskopbereich besitzen, und dass die Schleppstangeneinheit (10) eine von der Gebrauchsstellung verschiedene Aufbewahrungsstellung besitzt, in der das erste oder das zweite Schleppstangenelement (20, 40) reversibel gegenüber dem zweiten oder ersten Schleppstangenelement (40, 20) zumindest teilweise teleskopartig verschiebbar ist. Die Schleppstangeneinheit (10) ist sowohl in der Gebrauchsstellung als auch in der Aufbewahrungsstellung reversibel verriegelbar ist. Weiterhin ist das zweite Schleppstangenelement (40) fest mit dem Rahmen der zu bewegenden Maschineneinrichtung (CM) verbindbar.

## Beschreibung

Die Erfindung betrifft eine Maschineneinrichtung mit einer Deichsel für die zu bewegende Maschineneinrichtung, insbesondere eine Wurstclipmaschine, gemäß dem Oberbegriff des Anspruchs 1.

Häufig ist es notwendig, Maschineneinrichtungen oder Teile hiervon vorübergehend aus ihrer eigentlichen Aufstellposition herauszubewegen, beispielsweise um Wartungs- und/oder Reinigungsarbeiten zu ermöglichen. Hierbei kann die Maschineneinrichtung entweder geschoben oder gezogen werden, wobei im ersteren Fall keine gesonderten Handhabungselemente vorgesehen werden müssen, da zum Schieben unmittelbar an der Maschineneinrichtung "angegriffen" werden kann. Ist demgegenüber die Maschineneinrichtung zu ziehen, so bedarf es einer gesonderten Handhabungseinrichtung, da es häufig schwierig ist, an dem Maschinenrahmen bzw. Maschinenkörper eine Stelle zu finden, die ein Ziehen der Maschineneinrichtung überhaupt und/oder ohne deren Beschädigung erlaubt. Daher weisen derartige Maschineneinrichtungen häufig eine Deichsel auf, die vorübergehend oder dauerhaft mit dem Maschinenrahmen verbunden ist und die ein Ziehen der Maschineneinrichtung bzw. eines Teiles hiervon ermöglicht. Ist die Deichsel dauerhaft an der Maschineneinrichtung angebracht, so stellt sich das Problem, dass bei Nichtgebrauch der Deichsel diese in den Bewegungsraum um die Maschineneinrichtung herum hineinragt und so die Bedienung der Maschineneinrichtung behindert bzw. sogar gefährden kann.

Aus dem europäischen Patent 0 736 444 geht eine Deichsel für Flurförderzeug hervor, die einen Deichselschaft aufweist. Der Deichselschaft ist an einem Ende mit einer im Rahmen des Förderzeugs gelagerten vertikalen Lenkwelle und an dem anderen Ende mit einem Deichselkopf verbunden, an welchem Betätigungsorgane für den Betrieb des Förderzeugs angeordnet sind. Weiterhin ist vorgesehen, dass zwischen dem Deichselkopf und dem Deichselschaft mindestens ein Gelenk mit im Wesentlichen vertikaler Drehachse vorhanden ist und dass zwischen Deichselkopf und Rahmen ein Getriebe angeordnet ist derart, dass der Deichselkopf bei einer Stellung der Deichsel aus der Mittellage eine ergonomische Orientierung erhält.

Darüber hinaus ist aus der deutschen Offenlegungsschrift 195 34 974 eine zusammenlegbare Karre entnehmbar, welche eine schwenkbare Plattform, einen schwenkbaren Griff und zusammenlegbare sowie justierbare Rohranordnungen aufweist, um die Karre in eine ausgestreckte oder zurückgezogene Position zu verstellen. Die Karre ist als zweirädrige Handtransportkarre oder als vierrädrige Karre einsetzbar.

Es ist Aufgabe der vorliegenden Erfindung, eine Maschineneinrichtung mit einer Deichsel für die zu bewegende Maschineneinrichtung, insbesondere eine Wurstclipmaschine der eingangs genannten Art zu schaffen, wobei die Deichsel trotz dauerhafter Anbringung an der Maschineneinrichtung die Bedienung der Maschine nicht behindert.

Die vorstehende Aufgabe wird durch die Merkmale des Anspruchs 1 gelöst. In den sich daran anschließenden Ansprüchen 2 bis 16 finden sich vorteilhafte Ausgestaltungen hierzu.

Durch das Auflösen der Schleppstangeneinheit in mindestens ein erstes sowie ein zweites Schleppstangenelement, die jeweils einen Teleskopbereich besitzen, und durch das Verschieben des ersten oder des zweiten Schleppstangenelements reversibel gegenüber dem anderen, d.h. dem zweiten oder dem ersten Schleppstangenelement in zumindest teilweise teleskopartiger Weise besteht die Möglichkeit, in der Aufbewahrungsstellung, d.h. bei Nichtgebrauch der Deichsel die Schleppstangeneinheit in eine Position zu bringen, in der sie nicht mehr in den Bedienraum für die Maschineneinrichtung hineinragt und damit dann die Bedienung der Maschine nicht mehr behindert. Darüber hinaus wird durch die reversible Verriegelung der Schleppstangeneinheit sowohl in der Gebrauchsstellung als auch in der Aufbewahrungsstellung sichergestellt, dass sich in beiden Stellungen die gewünschte Funktionalität nicht von alleine auflöst und sich somit die Schleppstangeneinheit aus beispielsweise der Aufbewahrungsstellung selbstständig heraus bewegen kann. In diesem Zusammenhang ist zu bemerken, dass es bevorzugt ist, dass das erste Schleppstangenelement reversibel in das zweite Schleppstangenelement zumindest teilweise teleskopartig einschiebbar ist.

Damit eine leichtgängige und sicher geführte Bewegung aus der Gebrauchsstellung in die Aufbewahrungsstellung, und umgekehrt, des einen Schleppstangenelements gegenüber dem anderen Schleppstangenelement möglich ist, kann weiterhin vorgesehen sein, dass das erste und das zweite Schleppstangenelement zumindest in ihrem Teleskopbereich jeweils als Rohr ausgebildet sind, wobei vorzugsweise der Außendurchmesser des ersten Schleppstangenelements zumindest annähernd dem Innendurchmesser des zweiten Schleppstangenelements entspricht. Vor und/oder hinter dem Teleskopbereich jedes Schleppstangenelements können diese eine beliebige Form aufweisen, soweit die Funktionalität der erfindungsgemäßen Deichsel hiervon nicht beeinträchtigt ist.

Wie bereits vorstehend dargelegt wurde, ist bevorzugt, dass das erste Schleppstangenelement teleskopartig in das zweite Schleppstangenelement reversibel aus der Gebrauchsstellung in die Aufbewahrungsstellung einschiebbar ist. In diesem Fall ist es weiterhin vorteilhaft, wenn eines der beiden Schleppstangenelemente, vorzugsweise das zweite Schleppstangenelement, fest mit dem Rahmen der zu bewegenden Maschineneinrichtung verbindbar ist.

Um Materialkosten einzusparen, kann es weiterhin vorteilhaft sein, wenn eines der beiden Schleppstangenelemente, vorzugsweise das zweite Schleppstangenelement, axial kürzer ist als das andere, vorzugsweise das erste Schleppstangenelement. Ist beispielsweise das zweite Schleppstangenelement an der zu bewegenden Maschineneinrichtung angebracht, so genügt es, dass das zweite Schleppstangenelement ein Rohrstück ist, welches das erste Schleppstangenelement bei dessen Bewegung aus der Gebrauchsstellung in die Aufbewahrungsstellung und zurück sicher führt. Es ist nicht notwendig, dass das zweite Schleppstangenelement das erste Schleppstangenelement in der Aufbewahrungsstellung vollständig umschließt, da beispielsweise die Anbringung des zweiten Schleppstangenelements an der Maschineneinrichtung so erfolgen kann, dass derjenige Teil des ersten Schleppstangenelements, der sich nicht im Inneren des zweiten Schleppstangenelements befindet, in einer an der zu bewegenden Maschineneinrichtung vorhandenen Ausnehmung aufgenommen ist.

Zur Erleichterung der Ziehbewegung der zu bewegenden Maschineneinrichtung kann es vorteilhaft sein, wenn das Greifende der Schleppstangeneinheit einen das Ergreifen dieses Endes erleichternden Handgriff, beispielsweise in Form einer Greifstange und dergleichen, aufweist. Damit dieser Handgriff nicht bei in der Aufbewahrungsstellung befindlicher Schleppstangeneinheit eine Bewegung an der Maschineneinrichtung behindert, ist es weiterhin vorteilhaft, wenn das, das mit dem Handgriff versehen ist, d.h. das erste oder das zweite Schleppstangenelement, vorzugsweise das erste Schleppstangenelement, in der Aufbewahrungsstellung gegenüber der Gebrauchsstellung um ein vorzugsweise vorbestimmtes Winkelmaß in Umfangsrichtung der Schleppstangeneinheit verdreht ist. Der Verdrehwinkel, um den sich die Gebrauchsstellung des einen Schleppstangenelements, vorzugsweise des ersten Schleppstangenelements, von seiner Aufbewahrungsstellung unterscheidet, kann hierbei vorzugsweise zumindest annähernd 90° betragen.

Zur Erzielung der Verriegelung in der Gebrauchsstellung und in der Aufbewahrungsstellung ist es weiterhin vorteilhaft, wenn die Schleppstangeneinheit in der Gebrauchs- und der Aufbewahrungsstellung mittels einer vorzugsweise manuell betätigbaren Verriegelungseinrichtung reversibel verriegelbar ist. Die Verriegelungseinrichtung kann aber auch motorisch oder elektromagnetisch betätigbar sein.

Grundsätzlich kann die Verriegelungseinrichtung sowohl an dem ersten als auch an dem zweiten Schleppstangenelement vorgesehen sein. Es ist jedoch vorteilhaft, wenn die Verriegelungseinrichtung an dem zweiten Schleppstangenelement vorgesehen ist.

Eine von verschiedenen möglichen Gestaltungen der Verriegelungseinrichtung kann vorsehen, dass die Verriegelungseinrichtung ein in die Verriegelungsstellung federelastisch vorgespanntes Verriegelungselement aufweist, welches mit jeweils einem an der Schleppstangeneinheit für jeweils die Gebrauchsstellung und die Aufbewahrungsstellung vorgesehenen Verriegelungsgegenstück zusammenwirkt. Ist die Verriegelungseinrichtung vorzugsweise an dem zweiten Schleppstangenelement angeordnet, so befinden sich die Verriegelungsgegenstücke an dem ersten Schleppstangenelement.

Sind hierbei das Verriegelungselement eine Rolle und die Verriegelungsgegenstücke jeweils eine Verriegelungsausnehmung an der Schleppstangeneinheit, besteht die Möglichkeit, dass das Verriegelungselement während der Bewegung des einen Schleppstangenelements aus der Gebrauchsstellung in die Aufbewahrungsstellung, und umgekehrt, auf der Oberfläche dieses Schleppstangenelements abrollen kann, wodurch die Verriegelungseinrichtung nicht ständig in der Verriegelungslösestellung gehalten werden muss. Gleichzeitig verrastet bzw. verriegelt das Verriegelungselement in den Verriegelungsgegenstücken in Form von Verriegelungsausnehmungen bei Erreichen der Gebrauchs- oder Aufbewahrungsstellung selbsttätig, was dann auch sicht- und/oder hörbar ist.

Grundsätzlich können die Verriegelungsausnehmungen durch Durchgangsbohrungen in dem jeweiligen Schleppstangenelement gebildet sein. Da jedoch im Bereich von Maschineneinrichtungen hohe Feuchtigkeitswerte auftreten können, besteht die Möglichkeit, dass diese Feuchtigkeit in das Innere des Schleppstangenelements gelangt und dort gegebenenfalls korrosiv wirkt. Um dies zu verhindern, ist es weiterhin vorteilhaft, wenn die Verriegelungsausnehmungen durch Durchgangsbohrungen in der Schleppstangeneinheit gebildet sind, in die vorzugsweise Hülsen zum Abdichten der Durchgangsbohrungen dicht eingesetzt sind.

Zur Erleichterung der Betätigung der Verriegelungseinrichtung kann weiterhin vorgesehen sein, dass die Verriegelungseinrichtung ein Betätigungselement aufweist, welches mit dem Verriegelungselement verbunden ist und welches zusammen mit dem Verriegelungselement reversibel in eine Verriegelungsstellung sowie eine Verriegelungslösestellung bewegbar ist.

Um dabei die Bewegung des Betätigungselements zwischen der Verriegelungsstellung und der Verriegelungslösestellung zu begrenzen, können hierzu Anschläge an der Verriegelungseinrichtung vorgesehen sein.

Grundsätzlich kann die Bewegung des Verriegelungselements in beliebige Richtungen erfolgen. Eine einfache und sichere Bedienung lässt sich dadurch bewirken, dass die Bewegung des Verriegelungselements zumindest annähernd radial zu der Längserstreckung der Schleppstangeneinheit verläuft.

Wie bereits vorstehend erwähnt worden ist, kann es zur Vereinfachung der Ziehbewegung von Vorteil sein, wenn die Schleppstangeneinheit an ihrem Greifende einen Handgriff aufweist. Dieser kann vorzugsweise gegenüber der Längserstreckung der Schleppstangeneinheit abgekröpft sein.

Die hin- und hergehende Bewegung des einen Schleppstangenelements gegenüber dem anderen Schleppstangenelement kann durch das Zusammenwirken zwischen Verriegelungselement und Verriegelungsgegenstücke begrenzt werden. Jedoch besteht hierbei grundsätzlich die Möglichkeit, dass das zu bewegende Schleppstangenelement über die jeweilige Stellung hinaus bewegt wird. Um dies zu verhindern, kann es weiterhin vorteilhaft sein, wenn die Bewegung des einen Schleppstangenelements gegenüber dem anderen Schleppstangenelement mittels Anschlägen begrenzt ist.

Weitere vorteilhafte Ausgestaltungen sowie ein Ausführungsbeispiel werden nachstehend anhand der beigefügten Zeichnungsfiguren erläutert. In diesem Zusammenhang ist darauf hinzuweisen, dass sich die bei der Beschreibung des Ausführungsbeispiels verwendeten Begriffe "unten", "oben", "links" und "rechts" auf die Zeichnungsfiguren mit normal lesbaren Figurenbezeichnungen und Bezugszeichen beziehen. In den Zeichnungsfiguren sind:
- Fig. 1: eine Seitenansicht auf die Deichsel einer erfindungsgemäßen Maschineneinrichtung, mit der in ihrer Gebrauchsstellung befindlichen Deichsel;
- Fig. 2: eine zu Fig. 1 ähnliche Seitenansicht auf die Deichsel einer erfindungsgemäßen Maschineneinrichtung, mit der in ihrer Aufbewahrungsstellung befindlichen Deichsel;
- Fig. 3: eine teilweise aufgebrochene gegenüber Fig. 1 vergrößerte Seitenansicht auf die Deichsel in Gebrauchsstellung;
- Fig. 4: eine teilweise aufgebrochene gegenüber Fig. 2 vergrößerte Seitenansicht der Deichsel in Aufbewahrungsstellung;
- Fig. 5: eine teilweise aufgebrochene, gegenüber Fig. 1 vergrößerte Draufsicht auf die Deichsel in Gebrauchsstellung; und
- Fig. 6: eine teilweise aufgebrochene, gegenüber Fig. 2 vergrößerte Draufsicht auf die Deichsel in Aufbewahrungsstellung.

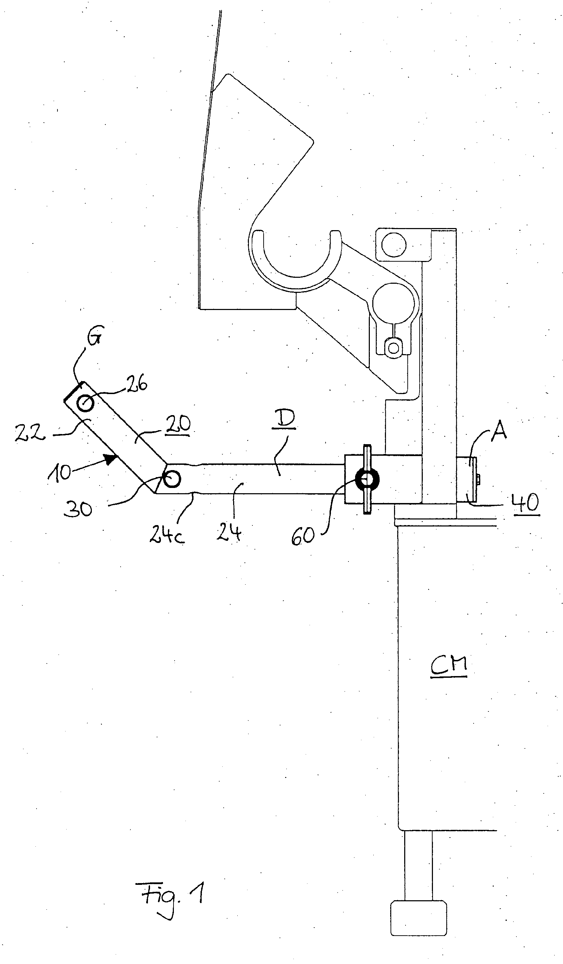

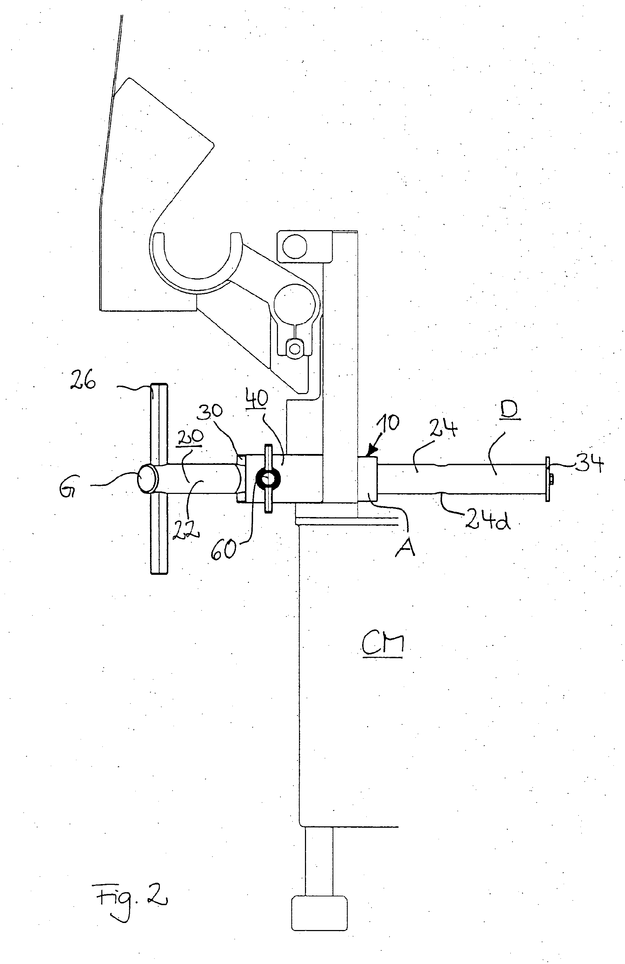

Eine in den Fig. 1 und 2 gezeigte Deichsel D ist an einer erfindungsgemäßen Wurstclipmaschine CM befestigt. Die Deichsel D ist dabei mit ihrer Schleppstangeneinheit 10 in der Weise an der Wurstclipmaschine CM angebracht, dass sie sich im wesentlichen horizontal, d.h. parallel zu dem nicht näher bezeichneten Aufstellboden der Maschine CM erstreckt.

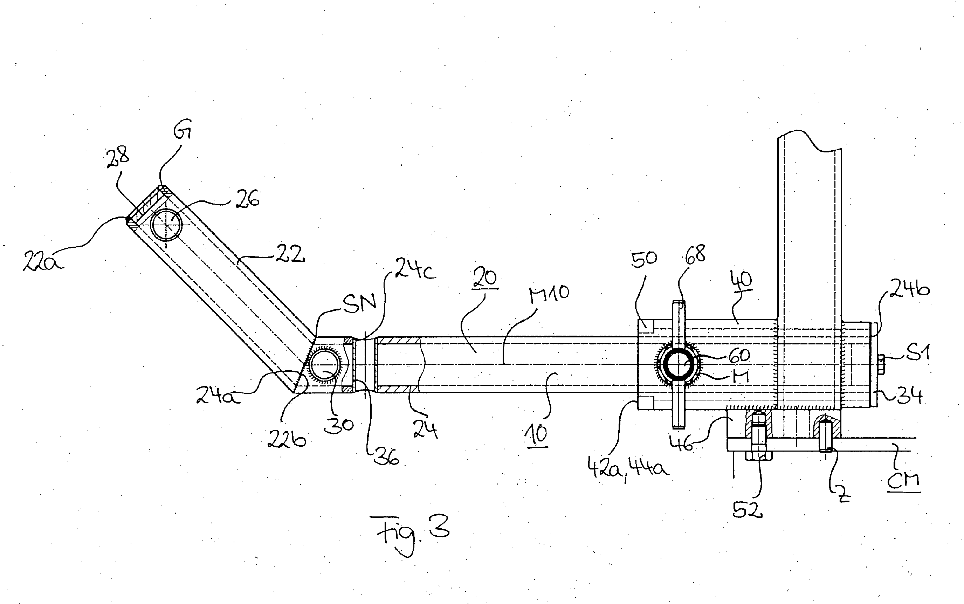

Wie weiterhin aus den Fig. 1 und 2 hervorgeht, besitzt die Deichsel D ein von der Wurstclipmaschine CM wegweisendes Greifende G und ein zu der Maschine CM weisendes Anbringende A. Im Bereich des Anbringendes A ist die Deichsel D mit dem Maschinenkörper bzw. Maschinenrahmen der Wurstclipmaschine CM verbunden. Wie aus einem Vergleich der Fig. 1 und 2 hervorgeht, ist bei in der Gebrauchsstellung befindlichen Deichsel D der Abstand zwischen dem Greifende G und dem Maschinenkörper der Wurstclipmaschine CM in horizontaler Richtung größer als bei in der Aufbewahrungsstellung befindlichen Deichsel D.
Die Schleppstangeneinheit 10 der Deichsel D weist als wesentliche Baugruppen ein erstes Schleppstangenelement 20, ein zweites Schleppstangenelement 40 und eine Verriegelungseinrichtung 60 auf. Diese einzelnen Baugruppen werden nachstehend näher in Verbindung mit den Fig. 3 bis 6 beschrieben.

Das erste Schleppstangenelement 20 ist, wie dies insbesondere aus Fig. 3 entnehmbar ist, durch zwei Rohrabschnitte, einen ersten und zweiten Rohrabschnitt 22, 24, mit jeweils kreisringförmigen Querschnitt gebildet.

Die beiden Rohrabschnitte 22, 24 besitzen jeweils einen identischen Innensowie Außendurchmesser, sind jedoch ungleich lang, wobei der erste Rohrabschnitt 22 kürzer ist als der zweite Rohrabschnitt 24. Der erste Rohrabschnitt 22 ist an seinem zu der Wurstclipmaschine CM weisenden Ende 22b mit dem von der Maschine CM wegweisenden Ende 24a des zweiten Rohrabschnitts 24 in einem Winkel von ca. 45° entlang einer Schweißnaht SN verbunden.

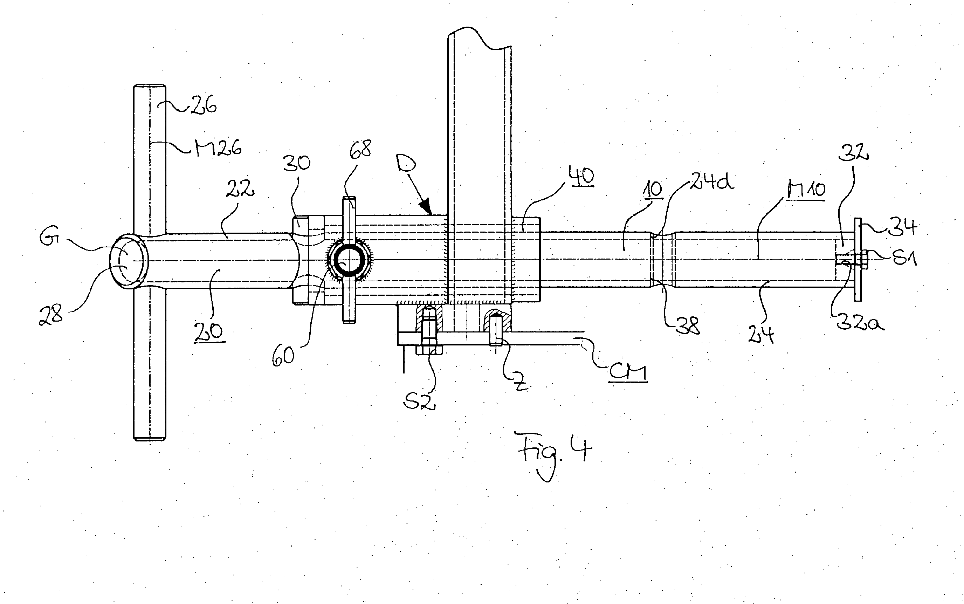

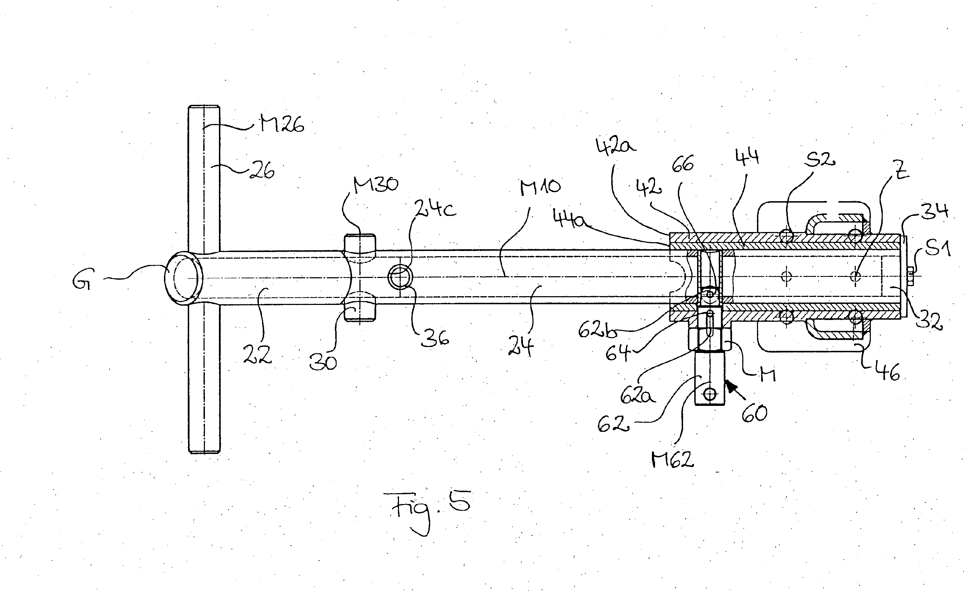

Im Bereich des das Greifende G der Deichsel D bildenden Endes 22a des ersten Rohrabschnitts 22 ist an diesem eine einen kreisförmigen Querschnitt aufweisende Greifstange 26 aus Vollmaterial fest angebracht, z.B. durch Schweißen. Die Mittellängsachse M26 der Greifstange 26 schneidet dabei die Mittellängsachse M10 der Schleppstangeneinheit 10 in einem Winkel von 90°. Gegenüber der Mittellängsachse M10 der Schleppstangeneinheit 10 ist die Greifstange 26 symmetrisch angeordnet ist (vgl. Fig. 4, 5).

Wie weiter insbesondere aus Fig. 3 hervorgeht, ist das von der Wurstclipmaschine CM wegweisende Ende 22a des ersten Rohrabschnitts 22 mit einem Scheibenstück 28, dessen Außendurchmesser dem Innendurchmesser des ersten Rohrabschnitts 22 entspricht, fluiddicht, beispielsweise durch Schweißen verschlossen. Das Scheibenstück 28 ist dabei so in das Ende 22a des ersten Rohrabschnitts 22 eingesetzt, dass es mit diesem bündig abschließt.

Im Bereich des von der Wurstclipmaschine CM wegweisenden Endes 24a des zweiten Rohrabschnitts 24 ist der zweite Rohrabschnitt 24 mit einem einen kreisförmigen Querschnitt besitzenden Anschlagstangenelement 30 aus Vollmaterial versehen. Das Anschlagstangenelement 30 ist in eine nicht näher bezeichnete Durchgangsbohrung des zweiten Rohrabschnitts 24 eingesetzt und dort mittels Schweißen festgelegt. Dabei schneidet die Mittellängsachse M30 des Anschlagstangenelements 30 in einem Winkel von 90° die Mittellängsachse M10 des zweiten Rohrabschnitts 24 (vgl. Fig. 5). Gegenüber der Mittellängsachse M10 der Schleppstangeneinheit 10 ist das Anschlagstangenelement 30 wiederum symmetrisch angeordnet ist (vgl. Fig. 4, 5).

In das zu der Wurstclipmaschine CM weisende Ende 24b des zweiten Rohrabschnitts 24 ist ein einen kreisförmigen Querschnitt aufweisendes Scheibenelement 32 fluiddicht eingesetzt, vorzugsweise dort eingeschweißt, welches eine koaxial zur Mittellängsachse M10 der Schleppstangeneinheit 10 verlaufende, mit einem Gewinde versehene Durchgangsbohrung 32a besitzt. In das Gewinde des Scheibenelements 32 ist eine Kopfschraube S1 eingeschraubt, welche ein den Außendurchmesser des zweiten Rohrabschnitts 24 und damit den Außendurchmesser des ersten Schleppstangenelements 20 insgesamt übergreifende, einen kreisförmigen Querschnitt aufweisende Anschlagscheibe 34 gegen das Ende 24b des zweiten Rohrabschnitts 24 hält. Das Anschlagstangenelement 30 und die Anschlagscheibe 34 wirken zusammen, um die hin- und hergehende Horizontalbewegung des ersten Schleppstangenelements 20 gegenüber dem zweiten Schleppstangenelement 40 zu begrenzen. Darüber hinaus definieren sie den Teleskopbereich des ersten Schleppstangenelements 20.

Weiterhin weist der zweite Rohrabschnitt 24 des ersten Schleppstangenelements 20 rechts neben dem Anschlagstangenelement 30 eine erste Verriegelungsdurchgangsbohrung 24c auf. Die nicht näher bezeichnete Bohrungsachse der Verriegelungsdurchgangsbohrung 24c schneidet die Mittellängsachse M10 in einem Winkel von 90° und verläuft in der Gebrauchsstellung der Deichsel 10 vertikal, wie dies aus den Fig. 1, 3 und 5 hervorgeht. In die Verriegelungsdurchgangsbohrung 24c ist eine zylindrische Hülse 36 eingesetzt, insbesondere eingeschweißt, um den Innenraum des ersten Schleppstangenelements 20 gegenüber einem eindringenden Fluid abzudichten. Die axiale Länge der Hülse 36 ist so bemessen, dass die Hülse 36 an ihren beiden Stirnenden mit der Außenumfangsfläche des zweiten Rohrabschnitts 24 zumindest annähernd abschließt.

Darüber hinaus weist der zweite Rohrabschnitt 24 des ersten Schleppstangenelements 20 links beabstandet von der Anschlagscheibe 34 eine zweite Verriegelungsdurchgangsbohrung 24d auf. Die nicht näher bezeichnete Bohrungsachse der Verriegelungsdurchgangsbohrung 24d schneidet die Mittellängsachse M10 in einem Winkel von 90° und verläuft in der Gebrauchsstellung der Deichsel 10 horizontal, wie dies aus der Fig. 5 hervorgeht. Mit anderen Worten verlaufen die Bohrungsachsen der beiden Verriegelungsdurchgangsbohrungen 24c, 24d um 90° verdreht zueinander. Auch in die Verriegelungsdurchgangsbohrung 24d ist eine zylindrische Hülse 38 eingesetzt, insbesondere eingeschweißt, um den Innenraum des ersten Schleppstangenelements 20 ebenfalls gegenüber einem eindringenden Fluid abzudichten. Wiederum ist die axiale Länge der Hülse 38 so bemessen, dass die Hülse 38 an ihren beiden Stirnenden mit der Außenumfangsfläche des zweiten Rohrabschnitts 24 zumindest annähernd abschließt.

Die Verriegelungsdurchgangsbohrungen 24c, 24d mit den Hülsen 36, 38 dienen als Verriegelungsgegenstücke für die nachstehend noch näher beschriebene Verriegelungseinrichtung 60, welche an dem zweiten Schleppstangenelement 40 vorgesehen ist. Sie legen die Gebrauchs- und die Aufbewahrungsstellung der Deichsel D bzw. des ersten Schleppstangenelements 20 fest, wobei die Verriegelungsdurchgangsbohrung 24c die Aufbewahrungsstellung und die Verriegelungsdurchgangsbohrung 24d die Gebrauchsstellung definieren.

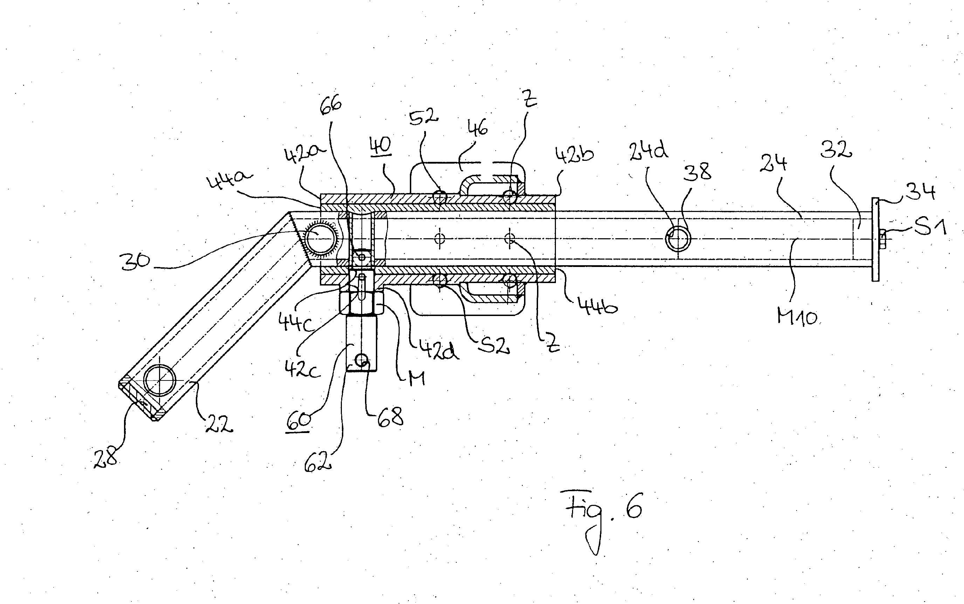

Wie insbesondere aus den Fig. 5 und 6 entnehmbar ist, weist das zweite Schleppstangenelement 40 ein erstes und zweites Rohrstück 42, 44 auf, die beide einen kreisringförmigen Querschnitt und die gleiche axiale Länge besitzen. Der Innendurchmesser des ersten Rohrstücks 42 entspricht dabei zumindest annähernd dem Außendurchmesser des zweiten Rohrstücks 44, wogegen der Innendurchmesser des zweiten Rohrstücks 44 zumindest annährend mit dem Außendurchmesser des zweiten Rohrabschnitts 24 des ersten Schleppstangenelements 20 übereinstimmt. Weiterhin ist das zweite Rohrstück 44 in das erste Rohrstück 42 in der Weise eingesetzt, dass beide Rohrstücke 42, 44 an ihren stirnseitigen Enden 42a, 44a bzw. 42b, 44b miteinander fluchten (vgl. Fig. 6), und mittels eines Schweiß- oder Schrumpfvorgangs aneinender fixiert sind. Die axiale Länge des zweiten Rohrstücks 44, d.h. das zweite Rohrstück 44 selbst bildet den Teleskopbereich des zweiten Schleppstangenelements. Es ist noch zu bemerken, dass, wie dies aus Fig. 3 hervorgeht, der Außendurchmesser der Anschlagscheibe 36 so gewählt ist, dass er in etwa dem Außendurchmesser des zweiten Schleppstangenelements 40 entspricht.

Wie insbesondere aus den Fig. 3 und 4 hervorgeht, ist das zweite Schleppstangenelement 40 durch Verwendung von vier Kopfschrauben S2 sowie zweier Zentrierstifte Z an der Maschineneinrichtung CM angebracht. Dazu ist das zweite Schleppstangenelement 40 bzw. das erste Rohrstück 42 an seiner Unterseite mit einem Befestigungsblock 46 versehen, der wiederum nicht näher bestimmte Gewindesacklochbohrungen für die Kopfschrauben S2 und Zentriersacklochbohrungen für die Zentrierstifte Z aufweist.

Weiterhin weist das zweite Schleppstangenelement 40 im Bereich seines linken von der Maschineneinrichtung CM weg weisenden, nicht näher bezeichneten Endes die Verriegelungseinrichtung 60 auf, deren Aufbau insbesondere aus den Fig. 5 und 6 hervorgeht.

Zur Aufnahme der Verriegelungseinrichtung 60 weist das erste und das zweite Rohrstück 42, 44 jeweils eine radial ausgerichtete und miteinander fluchtende Durchgangsbohrung 42c, 44c auf. Zur lösbaren Anbringung der Verriegelungseinrichtung 60 ist das erste Rohrstück 42 im Bereich seiner Durchgangsbohrung 42c mit einem Kragenansatz 42d versehen, der an seinem nach außen weisenden Ende ein nicht näher bezeichnetes Außengewinde aufweist. Nach Einsetzen der Verriegelungseinrichtung 60 in die beiden Durchgangsbohrungen 42c, 44c der Rohrstücke 42, 44 kann dann die Verriegelungseinrichtung 60 mittels einer Überwurfmutter M an dem ersten Rohrstück 42 festgelegt werden.

Wie insbesondere aus Fig. 5 entnehmbar ist, weist die Verriegelungseinrichtung 60 selbst wiederum ein Verriegelungsträgerelement 62 auf, welches aus einem einen kreisförmigen Querschnitt besitzenden Stangenmaterial hergestellt ist. Das Verriegelungsträgerelement 62 besitzt zwei nicht näher bezeichnete, axial aufeinander folgende Abschnitte, die unterschiedlich große Außendurchmesser besitzen, wobei derjenige Abschnitt, der den gegenüber dem anderen Abschnitt kleineren Außendurchmesser besitzt, in die Durchgangsbohrungen 42c, 44c der Rohrstücke 42, 44 eingesetzt ist. In den Ansatz 42d des ersten Rohrstücks 42 ist ein Zapfen 64 fest eingesetzt, der sich im Wesentlichen senkrecht und symmetrisch zu der Längserstreckung des Verriegelungsträgerelements 62 erstreckt. Der Zapfen 64 greift in eine schlitzförmige Ausnehmung 62a an dem Verriegelungsträgerelement 62 ein, welche sich im Wesentlichen in Längsrichtung symmetrisch zur Mittellängsachse M62 des Verriegelungsträgerelements 62 erstreckt. Durch den Zapfen 64 und die Ausnehmung 62a wird die Bewegung des Verriegelungsträgerelements 62, welche radial zu der Schleppstangeneinheit 10 verläuft, aus der Verriegelungsstellung in die Verriegelungslösestellung, und umgekehrt, begrenzt.

An seinem zu der Schleppstangeneinheit 10 bzw. dem zweiten Schleppstangenelement 20 weisenden Ende ist das Verriegelungsträgerelement 62 mit einer Achse 62b versehen, auf der drehbar, aber axial fest eine Rolle 66 aufgesetzt ist. Die Rolle 66 bildet das Verriegelungselement. Die Achse 62b und damit die Rolle 66 sind dabei so ausgerichtet, dass sich die Rolle auf der Umfangsoberfläche des ersten Schleppstangenelements 20, insbesondere auf dessen zweiten Rohrabschnitt 24, während des Bewegens der Deichsel D aus der Aufbewahrungsstellung in die Gebrauchsstellung, und umgekehrt, abrollen kann.

Zur Erreichung einer sicheren Verriegelung kann das Verriegelungsträgerelement 62 in Richtung der Verriegelungsstellung der Rolle 66 mittels einer nicht weiter dargestellten Feder elastisch vorgespannt sein. Weiterhin ist noch zu bemerken, dass an dem von dem zweiten Schleppstangenelement 40 wegweisenden Ende des Verriegelungselements 62 eine ein Betätigungselement bildende Greifstange 68 in ähnlicher Weise eingesetzt ist, wie dies im Zusammenhang mit der Greifstange 26 an dem ersten Rohrabschnitt 22 des ersten Schleppstangenelements 20 der Fall ist.

Die Funktionsweise der erfindungsgemäßen Deichsel D ist wie folgt:
In der in den Fig. 2, 4 und 6 gezeigten Aufbewahrungsstellung ist das erste Schleppstangenelement 20 in dem zweiten Schleppstangenelement 40 soweit nach rechts verschoben, dass das Anschlagzapfenelement 30 in einer an den beiden von der Wurstclipmaschine CM wegweisenden Enden 42a, 44a der beiden Rohrstücke 42, 44 des zweiten Schleppstangenelements 40 vorgesehenen Ausnehmung 50 zumindest hälftig eingreift, wie dies insbesondere aus Fig. 4 entnehmbar ist. Gleichzeitig ist das erste Schleppstangenelement 20 so ausgerichtet, dass das Greifende G bzw. die Griffstange 26 im wesentlichen vertikal verläuft, wie dies aus den Fig. 2, 4 und 6 hervorgeht. Mittels der Verriegelungseinrichtung 60, insbesondere mittels der Rolle 66, welche in die erste Durchgangsbohrung 24c des zweiten Schleppstangenelements 24 eingreift, ist das erste Schleppstangenelement 20 in seiner axialen Lage festgelegt.

Muss die Wurstclipmaschine, oder ein Teil hiervon, bewegt werden, so wird das Verriegelungsträgerelement 62 an der Griffstange 68 ergriffen und aus seiner Verriegelungsposition nach radial außen herausgezogen. Anschließend kann das erste Schleppstangenelement 20 aus dem zweiten Schleppstangenelement 40 herausgezogen und dabei gleichzeitig oder vorher oder nachher um 90° in der Weise gedreht werden, dass die Griffstange 26 am Griffende G der Deichsel D eine horizontale Ausrichtung einnimmt, wobei der erste Rohrabschnitt 22 des ersten Schleppstangenelements 20 nach oben weist. Mit Erreichen der zweiten Durchgangsbohrung 24d bzw. mit Anlage der Anschlagscheibe 34 an dem zur Wurstclipmaschine CM weisenden stirnseitigen Enden 42b, 44b der beiden Rohrstücke 42, 44 wird die Auszugsbewegung des ersten Schleppstangenelements 20 begrenzt.

Während des Ausziehens kann das Verriegelungsträgerelement 62 entweder festgehalten oder aber dadurch, dass sich die Rolle 66 auf der Außenumfangsoberfläche des ersten Schleppstangenelements 20 abstützt, losgelassen werden. Bei Erreichen der Gebrauchsstellung rastet die Rolle 66 entweder durch die Wirkung einer entsprechenden Feder und/oder durch eine Betätigung von Hand in die zweite Durchgangsdurchbrechung 24d des ersten Schleppstangenelements 20 ein und verriegelt dort. Nunmehr kann mittels der Deichsel D die Wurstclipmaschine CM bewegt werden. Um die Deichsel D wieder in ihre Aufbewahrungsstellung zurück zu bringen, ist die vorstehend geschilderte Vorgehensweise in umgekehrter Reihenfolge auszuführen.

Es ist noch zu bemerken, dass als Material für sämtliche vorstehend beschriebenen Bauteile der erfindungsgemäßen Deichsel D nicht-rostender Stahl, der ggf. noch Oberflächen behandelt sein kann, verwendet wird.

Weiterhin ist noch zu bemerken, dass die Position des ersten Schleppstangenelements 20 gegenüber dem zweiten Schleppstangenelement 40 in der Aufbewahrungsstellung und der Gebrauchsstellung vorzugsweise durch das Zusammenwirken der Verriegelungseinrichtung 60 mit den Verriegelungsausnehmungen 24c, 24d bestimmt ist. Der axiale Abstand zwischen den beiden Anschlagselementen 30, 34 ist so bemessen, dass dieser mindestens dem axialen Abstand der Mittellängsachsen der beiden Durchgangsbohrungen 24c, 24d entspricht, vorzugsweise jedoch größer als dieser axiale Abstand ist.

## Patentansprüche

1. Maschineneinrichtung mit einer Deichsel, insbesondere eine Clipmaschine (CM), enthaltend eine Schleppstangeneinheit (10), die ein mit der Maschineneinrichtung (CM) verbindbares Anbringende (A) sowie ein Greifende (G) aufweist und die eine Gebrauchsstellung besitzt,
**dadurch gekennzeichnet, dass** die Schleppstangeneinheit (10) mindestens ein erstes und ein zweites Schleppstangenelement (20, 40) aufweist, die jeweils einen Teleskopbereich besitzen, und dass die Schleppstangeneinheit (10) eine von der Gebrauchsstellung verschiedene Aufbewahrungsstellung besitzt, in der das erste oder das zweite Schleppstangenelement (20, 40) reversibel gegenüber dem zweiten oder ersten Schleppstangenelement (40, 20) zumindest teilweise teleskopartig verschiebbar ist, wobei die Schleppstangeneinheit (10) sowohl in der Gebrauchsstellung als auch in der Aufbewahrungsstellung reversibel verriegelbar ist, und wobei das zweite Schleppstangenelement (40) fest mit dem Rahmen der zu bewegenden Maschineneinrichtung (CM) verbindbar ist.

2. Maschineneinrichtung nach Anspruch 1,
**dadurch gekennzeichnet, dass** das erste und das zweite Schleppstangenelement (20, 40) zumindest in ihrem Teleskopbereich jeweils als Rohr ausgebildet sind, wobei vorzugsweise der Außendurchmesser des ersten Schleppstangenelements (20) zumindest annährend dem Innendurchmesser des zweiten Schleppstangenelements (40) entspricht.

3. Maschineneinrichtung nach den Ansprüchen 1 oder 2,
**dadurch gekennzeichnet, dass** eines der beide Schleppstangenelemente (20, 40), vorzugsweise das zweite Schleppstangenelement (40), axial kürzer ist als das andere, vorzugsweise erste Schleppstangenelement (20).

4. Maschineneinrichtung nach einem der Ansprüche 1 bis 3,
**dadurch gekennzeichnet, dass** das erste oder das zweite Schleppstangenelement (20, 40), vorzugsweise das erste Schleppstangenelement (20), in der Aufbewahrungsstellung gegenüber der Gebrauchsstellung um ein vorzugsweise vorbestimmtes Winkelmaß in Umfangsrichtung der Schleppstangeneinheit (10) verdreht ist.

5. Maschineneinrichtung nach Anspruch 4,
**dadurch gekennzeichnet, dass** der Verdrehwinkel, um den sich die Gebrauchsstellung des einen Schleppstangenelements (20, 40) von seiner Aufbewahrungsstellung unterscheidet, vorzugsweise zumindest annähernd 90° beträgt.

6. Maschineneinrichtung nach einem der Ansprüche 1 bis 5,
**dadurch gekennzeichnet, dass** die Schleppstangeneinheit (10) in der Gebrauchs- und der Aufbewahrungsstellung mittels einer vorzugsweise manuell betätigbaren Verriegelungseinrichtung (60) reversibel verriegelbar ist.

7. Maschineneinrichtung nach Anspruch 6,
**dadurch gekennzeichnet, dass** die Verriegelungseinrichtung (60) an dem zweiten Schleppstangenelement (40) vorgesehen ist.

8. Maschineneinrichtung nach Anspruch 6 oder 7,
**dadurch gekennzeichnet, dass** die Verriegelungseinrichtung (60) ein in die Verriegelungsstellung federelastisch vorgespanntes Verriegelungselement (66) aufweist, das mit an der Schleppstangeneinheit (10) für jeweils die Gebrauchsstellung und die Aufbewahrungsstellung vorgesehenes Verriegelungsgegenstück (24c, 24d) zusammen wirkt.

9. Maschineneinrichtung nach Anspruch 8,
**dadurch gekennzeichnet, dass** das Verriegelungselement eine Rolle (66) und die Verriegelungsgegenstücke jeweils eine Verriegelungsausnehmung (24c, 24d) an der Schleppstangeneinheit (10) sind.

10. Maschineneinrichtung nach Anspruch 9,
**dadurch gekennzeichnet, dass** die Verriegelungsausnehmungen durch Durchgangsbohrungen (24c, 24d) in der Schleppstangeneinheit (10) gebildet sind, in die vorzugsweise Hülsen (36, 38) zum Abdichten eingesetzt sind.

11. Maschineneinrichtung nach einem der Ansprüche 6 bis 10,
**dadurch gekennzeichnet, dass** die Verriegelungseinrichtung (60) ein Betätigungselement (62) aufweist, welches mit dem Verriegelungselement verbunden ist und welches zusammen mit dem Verriegelungselement (66) reversibel in eine Verriegelungsstellung und eine Verriegelungslösestellung bewegbar ist.

12. Maschineneinrichtung nach Anspruch 11,
**dadurch gekennzeichnet, dass** die Bewegung des Betätigungselements (62) zwischen der Verriegelungsstellung und der Verriegelungslösestellung mittels Anschlägen (62a, 64) begrenzt ist.

13. Maschineneinrichtung nach einem der Ansprüche 8 bis 12,
**dadurch gekennzeichnet, dass** die Bewegung des Verriegelungselements (66) zumindest annährend radial zu der Längserstreckung der Schleppstangeneinheit (10) verläuft.

14. Maschineneinrichtung nach einem der Ansprüche 1 bis 13,
**dadurch gekennzeichnet, dass** die Schleppstangeneinheit (10) an ihrem Greifende (G) einen Handgriff (26) aufweist, der vorzugsweise gegenüber der Längserstreckung der Schleppstangeneinheit (10) abgekröpft ist.

15. Maschineneinrichtung nach einem der Ansprüche 1 bis 14,
**dadurch gekennzeichnet, dass** die Bewegung des einen Schleppstangenelements (20, 40) gegenüber dem anderen Schleppstangenelement (40, 20) durch Anschläge (30, 34) begrenzt ist.
